# EUROPEAN PATENT SPECIFICATION

(11) **EP 4 446 156 B1**
(45) Date of publication and mention of the grant of the patent: **07.10.2026**
(21) Application number: 23188433.9
(22) Date of filing: 28.07.2023
(51) Int. Cl.: B60K 35/20

(54) **DEVICE CONTROL SYSTEM, METHOD AND VEHICLE**
VORRICHTUNGSSTEUERUNGSSYSTEM, VERFAHREN UND FAHRZEUG
SYSTÈME DE COMMANDE DE DISPOSITIF, PROCÉDÉ ET VÉHICULE

(30) Priority: 12.04.2023 CN 202310391469
(43) Date of publication of application: 16.10.2024
(73) Proprietor: Xiaomi EV Technology Co., Ltd., Beijing 100176 (CN)
(72) Inventor: WANG, Yanjiong, Beijing, 100176 (CN); HUA, Chengping, Beijing, 100176 (CN); LIU, Jie, Beijing, 100176 (CN); FENG, Ping, Beijing, 100176 (CN)
(74) Representative: dompatent

(56) References cited:
- WO-A1-2012/010210
- DE-A1- 10 120 465
- DE-A1- 102012 009 021
- DE-A1- 102019 200 258
- DE-B3- 102013 013 167
- US-A1- 2016 150 020

## Description

### TECHNICAL FIELD

The present invention relates to the field of vehicle control, in particular to a device control system, method and a vehicle.

### BACKGROUND

In a case that in a field of current vehicles, a vehicle-mounted device is connected with a vehicle, the vehicle is usually in wired connection with the vehicle-mounted device through an external interface of the vehicle. In the related art, in a case that the vehicle-mounted device is connected with the vehicle, the external interface is usually connected merely with a power supply apparatus of the vehicle, the vehicle-mounted device may merely be powered through the external interface of the vehicle, control over the vehicle-mounted device cannot be implemented through the external interface by means of a central control screen, and use experience of a user is affected.

US20160150020A1 discloses a computer-implemented method, including: establishing a connection between a mobile device and an in-vehicle information/entertainment system; receiving a communication from the mobile device, the communication being associated with an input of a first modality type that was received by the mobile device, the input being associated with accomplishing a task; performing one or more actions associated with the task; receiving input of a second modality type that is different from the first modality type, the input of the second modality type being associated with performing the task; performing one or more actions associated with the input of the second modality type for performing the task; where the in-vehicle information/entertainment system is configured to receive input of at least a third modality type that is different from the first and second modality types to perform one or more actions associated with the task or one or more actions associated with a different task.

DE102019200258A1 discloses a holding device for mounting a mobile terminal in a motor vehicle, the holding device including a carrier unit with a contact region in which a contact surface for placing the mobile terminal and a fixing device for securing the terminal against the contact surface are provided, and an output region arranged adjacent to the contact region in which a display device is provided. A control device configured to operate, using the display device, an operating interface for controlling at least one vehicle function of the motor vehicle, where the contact region includes an additional display device on the contact surface, and the control device is configured to operate, using the additional display device, an additional operating interface for at least one supplementary function provided as a replacement for the terminal if a detection device of the holding device signals the absence of the terminal on the contact surface.

WO2012010210A1 discloses a mobile device cradle for vehicle applications, including: a first interface for data exchange with a mobile device, a second interface (B) for data exchange with an interface for access to electronic control devices of a vehicle, and a control unit for controlling access to the electronic control devices of the vehicle from the mobile device.

### SUMMARY

The disclosure provides a device control system, method and a vehicle.

According to a first aspect of an example of the disclosure, a device control system is provided and includes: a central control screen, a vehicle-mounted device and a vehicle control apparatus, the central control screen includes a plurality of external interfaces, and the central control screen is connected with the vehicle-mounted device through the plurality of external interfaces; the vehicle control apparatus is connected with the central control screen;
the vehicle control apparatus is configured to obtain device data of the vehicle-mounted device through the central control screen, generate a plurality of operation indication information corresponding to the device data and send the plurality of operation indication information to the central control screen;
the central control screen is configured to generate a device operation instruction in response to a selection operation performed by a user for the plurality of operation indication information and send the device operation instruction to the vehicle-mounted device through the external interface; and
the vehicle-mounted device is configured to execute a device operation corresponding to the device operation instruction.

Optionally, the vehicle-mounted device is further configured to send device authentication information of the vehicle-mounted device to the vehicle control apparatus through the central control screen; and
the vehicle control apparatus is configured to perform device authentication on the vehicle-mounted device according to the device authentication information.

Optionally, the vehicle-mounted device is further configured to send device connection status information periodically to the vehicle control apparatus through the central control screen in a case that authentication of the vehicle-mounted device is successful, the device connection status information being used for indicating that connection between the vehicle-mounted device and the vehicle control apparatus is normal.

Optionally, the vehicle control apparatus is further configured to send a power-off instruction to the vehicle-mounted device through the central control screen in a case that authentication of the vehicle-mounted device fails; and
the vehicle-mounted device is further configured to power off according to the power-off instruction.

Optionally, the vehicle control apparatus is further configured to supply power to the vehicle-mounted device according to preset power through the external interface of the central control screen in a case that authentication of the vehicle-mounted device fails.

Optionally, the central control screen is configured to display the plurality of operation indication information and generate, in response to a selection operation triggered by the user based on the plurality of displayed operation indication information, the device operation instruction.

According to a second aspect of an example of the disclosure, a device control method is provided and performed by a vehicle-mounted device in a device control system. The device control system includes: a central control screen, a vehicle-mounted device and a vehicle control apparatus, the central control screen includes a plurality of external interfaces, and the central control screen is connected with the vehicle-mounted device through the plurality of external interfaces; and the vehicle control apparatus is connected with the central control screen. The method includes:
receiving, through the external interface, a device operation instruction sent by the central control screen, the device operation instruction being an operation instruction generated by the central control screen in response to a selection operation performed by a user for a plurality of operation indication information, and the operation indication information being indication information generated by the vehicle control apparatus according to obtained device data of the vehicle-mounted device; and
executing a device operation corresponding to the device operation instruction according to the device operation instruction.

Optionally, before receiving, through the external interface, the device operation instruction sent by the central control screen, the method further includes:
sending device authentication information of the vehicle-mounted device to the vehicle control apparatus through the central control screen; and
receiving a device authentication result sent by the vehicle control apparatus through the central control screen, the device authentication result being used for indicating whether the vehicle-mounted device is a to-be-connected device.

Optionally, the method further includes:
sending device connection status information periodically to the vehicle control apparatus through the central control screen in a case that authentication is successful, the device connection status information being used for indicating that connection between the vehicle-mounted device and the vehicle control apparatus is normal.

Optionally, the method further includes:
receiving a power-off instruction sent by the vehicle control apparatus through the central control screen in a case that authentication fails, and powering off according to the power-off instruction.

Optionally, the method further includes:
performing charging according to an electric quantity of preset power transmitted through the external interface in a case that authentication fails.

According to a third aspect of an example of the disclosure, a device control method is provided and performed by a vehicle control apparatus in a device control system. The device control system includes: a central control screen, a vehicle-mounted device and a vehicle control apparatus, the central control screen includes a plurality of external interfaces, and the central control screen is connected with the vehicle-mounted device through the plurality of external interfaces; and the vehicle control apparatus is connected with the central control screen. The method includes:
obtaining device data of the vehicle-mounted device through the central control screen;
generating a plurality of operation indication information corresponding to the device data according to the device data; and
sending the plurality of operation indication information to the central control screen.

Optionally, before obtaining device data of the vehicle-mounted device through the central control screen, the method further includes:
receiving device authentication information sent by the vehicle-mounted device through the central control screen; and
performing device authentication on the vehicle-mounted device according to the device authentication information, and sending a device authentication result to the vehicle-mounted device through the central control screen, the device authentication result being used for indicating whether the vehicle-mounted device is a to-be-connected device.

Optionally, the method further includes:
receiving device connection status information sent periodically by the vehicle-mounted device through the central control screen in a case that authentication of the vehicle-mounted device is successful, the device connection status information being used for indicating that connection between the vehicle-mounted device and the vehicle control apparatus is normal; and
determining, according to the device connection status information, that connection between the vehicle-mounted device and the vehicle control apparatus is normal.

Optionally, the method further includes:
sending, through the central control screen, a power-off instruction to the vehicle-mounted device in a case that authentication of the vehicle-mounted device fails, the power-off instruction being used for indicating the vehicle-mounted device to power off according to the power-off instruction.

Optionally, the method further includes:
supplying power to the vehicle-mounted device according to preset power through the external interface of the central control screen in a case that authentication of the vehicle-mounted device fails.

According to a fourth aspect of an example of the disclosure, a device control method is provided and performed by a central control screen in a device control system. The device control system includes: a central control screen, a vehicle-mounted device and a vehicle control apparatus, the central control screen includes a plurality of external interfaces, and the central control screen is connected with the vehicle-mounted device through the plurality of external interfaces; and the vehicle control apparatus is connected with the central control screen. The method includes:
receiving a plurality of operation indication information sent by the vehicle control apparatus, the operation indication information being indication information generated by the vehicle control apparatus according to obtained device data of the vehicle-mounted device;
generating a device operation instruction in response to a selection operation performed by a user for the plurality of operation indication information; and
sending the device operation instruction to the vehicle-mounted device through the external interface, the device operation instruction being used for indicating the vehicle-mounted device to execute a device operation corresponding to the device operation instruction.

Optionally, after receiving the plurality of operation indication information sent by the vehicle control apparatus, the method further includes:
displaying the plurality of operation indication information.

According to a fifth aspect of an example of the disclosure, a vehicle is provided and includes any one device control system provided by the first aspect of the disclosure.

Technical solutions provided by the examples of the disclosure may include the following beneficial effects.

By adopting the above technical solutions, the device control system includes: the central control screen, the vehicle-mounted device and the vehicle control apparatus, the central control screen includes a plurality of external interfaces, and the central control screen is connected with the vehicle-mounted device through the plurality of external interfaces; the vehicle control apparatus is connected with the central control screen; the vehicle control apparatus is configured to obtain the device data of the vehicle-mounted device through the central control screen, generate a plurality of operation indication information corresponding to the device data and send the plurality of operation indication information to the central control screen; the central control screen is configured to generate the device operation instruction in response to the selection operation performed by the user for the plurality of operation indication information, and send the device operation instruction to the vehicle-mounted device through the external interface; and the vehicle-mounted device is configured to execute the device operation corresponding to the device operation instruction.

In this way, the central control screen of a vehicle includes a plurality of external interfaces, the vehicle-mounted device is connected with the vehicle control apparatus through the external interface of the central control screen, and the central control screen generates the device operation instruction in response to the selection operation performed by the user for the plurality of operation indication information, so as to control the connected vehicle-mounted device, thus control over the vehicle-mounted device may be implemented through the central control screen, and use experience of the user is improved.

It is to be understood that the above general description and the following detailed description are merely examples and explanatory instead of limiting the disclosure.

### BRIEF DESCRIPTION OF THE DRAWINGS

Accompanying drawings here, which are incorporated in and constitute a part of the specification, illustrate examples consistent with the disclosure and, together with the specification, serve to explain principles of the disclosure.
Fig. 1 is a block diagram of a device control system shown according to an example.
Fig. 2 is a flowchart of a device control method shown according to an example.
Fig. 3 is a flowchart of another device control method shown according to the example shown in Fig. 2.
Fig. 4 is a flowchart of another device control method shown according to the example shown in Fig. 3.
Fig. 5 is a flowchart of a device control method shown according to an example.
Fig. 6 is a flowchart of another device control method shown according to the example shown in Fig. 5.
Fig. 7 is a flowchart of another device control method shown according to the example shown in Fig. 6.
Fig. 8 is a flowchart of a device control method shown according to an example.
Fig. 9 is a flowchart of another device control method shown according to an example.
Fig. 10 is a block diagram of a device control apparatus shown according to an example.
Fig. 11 is a block diagram of another device control apparatus shown according to the example shown in Fig. 10.
Fig. 12 is a block diagram of another device control apparatus shown according to the example shown in Fig. 11.
Fig. 13 is a block diagram of another device control apparatus shown according to the example shown in Fig. 11.
Fig. 14 is a block diagram of another device control apparatus according to the example shown in Fig. 11.
Fig. 15 is a block diagram of a device control apparatus shown according to an example.
Fig. 16 is a block diagram of another device control apparatus shown according to the example shown in Fig. 15.
Fig. 17 is a block diagram of another device control apparatus shown according to the example shown in Fig. 16.
Fig. 18 is a block diagram of another device control apparatus shown according to the example shown in Fig. 16.
Fig. 19 is a block diagram of another device control apparatus shown according to the example shown in Fig. 16.
Fig. 20 is a block diagram of a device control apparatus shown according to an example.
Fig. 21 is a block diagram of another device control apparatus shown according to the example in Fig. 20.
Fig. 22 is a block diagram of a vehicle shown according to an example.

### DETAILED DESCRIPTION

The examples will be described in detail here, and their instances are represented in the accompanying drawings. Unless otherwise indicated, when the following description refers to the accompanying drawings, the same number in the different accompanying drawings represents the same or similar elements. Implementations described in the following examples do not represent all implementations consistent with the disclosure. Rather, they are merely examples of an apparatus and method consistent with some aspects of the disclosure as detailed in appended claims.

Before introducing a device control system, method and a vehicle provided by the disclosure, an application scene that each example of the disclosure concerns is introduced. The disclosure may be applied to a device control system of a vehicle. In the related art, in a case that in a field of current vehicles, a vehicle-mounted device is connected with a vehicle, the vehicle is usually in wired connection with the vehicle-mounted device through an external interface of the vehicle. In a case that wired connection is adopted, the vehicle is connected with the vehicle-mounted device through the external interface, a vehicle-mounted external interface inside the vehicle usually includes a cigarette lighter interface and/or a universal serial bus (USB) interface, but the number of external interfaces in an existing vehicle is limited and is usually two or less than two, and a plurality of vehicle-mounted devices cannot be connected with the vehicle at the same time.

In a case that the vehicle-mounted device is connected with the vehicle, control over the vehicle-mounted device cannot be implemented through the external interface, which affects use experience of a user. For example, the vehicle-mounted device may be a vehicle-mounted monitor, in a case that the user needs to use the vehicle-mounted monitor, under a related connection mode, the external interface is merely used for charging, control over functions of the vehicle-mounted monitor such as turning on, turning off, photographing and camera shooting cannot be implemented according to the external interface of a central control screen, and the user needs to manually operate the vehicle-mounted monitor instead, so the use experience of the user may be affected.

In order to solve the above problem, the disclosure provides a device control system, method and a vehicle. The central control screen of the vehicle includes a plurality of external interfaces, the vehicle-mounted device is connected with a vehicle control apparatus through the external interface of the central control screen, and the central control screen generates a device operation instruction in response to a selection operation performed by the user for a plurality of operation indication information, so as to control the connected vehicle-mounted device, and thus control over the vehicle-mounted device may be implemented through the external interface by means of the central control screen, and use experience of the user is improved.

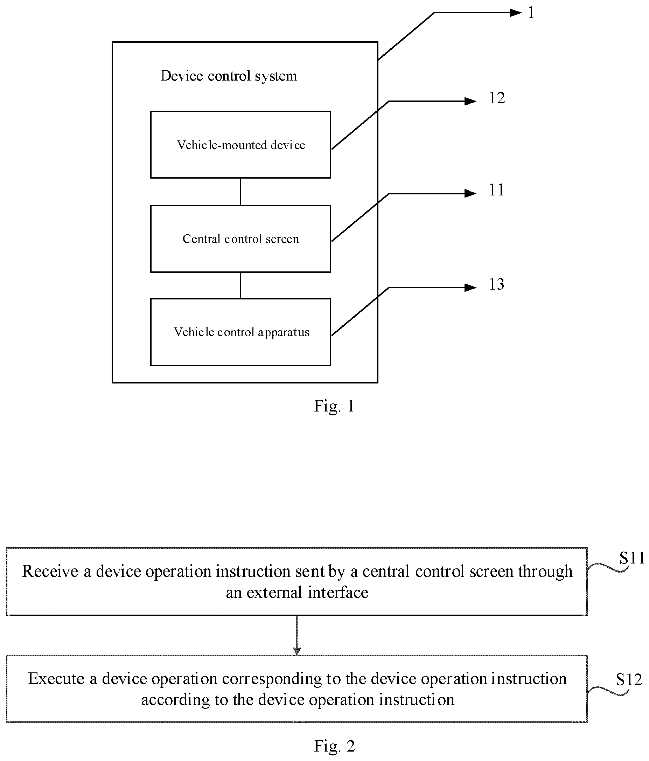

Fig. 1 is a block diagram of a device control system shown according to an example. As shown in Fig. 1, the system 1 includes: a central control screen 11, a vehicle-mounted device 12 and a vehicle control apparatus 13.

The central control screen 11 includes a plurality of external interfaces. The central control screen 11 is connected with the vehicle-mounted device 12 through the plurality of external interfaces. The vehicle control apparatus 13 is connected with the central control screen 11.

For example, the central control screen 11 may be arranged on a dashboard inside the vehicle and used for displaying internal data of the vehicle and realizing an entertainment function, for example, displaying a vehicle speed, performing driving navigation, and the like. The plurality of external interfaces may be arranged in peripheral side surfaces of the central control screen 11 and may be used for being in wired and/or wireless connection with the vehicle-mounted device 12, the central control screen 11 and the vehicle control apparatus 13 may be connected through the controller area network (CAN) bus inside the vehicle, so that the vehicle-mounted device 12 may be connected with the vehicle control apparatus 13 through the central control screen 11, the vehicle control apparatus 13 may include an on board unit, and the on board unit can implement people-to-vehicle and vehicle-to-outside (vehicle-to-vehicle) information communication in terms of functions. In this way, a plurality of vehicle-mounted devices 12 may be connected with the vehicle at the same time, and interconnection efficiency is improved.

The vehicle control apparatus 13 may be configured to obtain device data of the vehicle-mounted device 12 through the central control screen 11, generate a plurality of operation indication information corresponding to the device data and send the plurality of operation indication information to the central control screen 11.

The vehicle-mounted device 12 may include a vehicle-mounted monitor, a phone holder, an ambient light and other external devices used for being connected with the vehicle. The device data of the vehicle-mounted device 12 may include some corresponding device action signals in a case that the vehicle-mounted device 12 performs device actions, for example, a turn-on signal corresponding to an action of turning on the vehicle-mounted monitor, a turn-off signal corresponding to an action of turning off the vehicle-mounted monitor, a camera shooting signal corresponding to an action of shooting an emergency video by using the vehicle-mounted monitor, and the like.

Optionally, the central control screen 11 may be configured to display the plurality of operation indication information and generate a device operation instruction in response to a selection operation triggered by a user based on the plurality of displayed operation indication information.

For example, the vehicle control apparatus 13 may firstly establish communication connection with the central control screen 11 through the CAN bus inside the vehicle, in a case that the vehicle-mounted device 12 is connected with the vehicle control apparatus 13 through the external interface of the central control screen 11, the vehicle control apparatus 13 may perform device identity authentication on the vehicle-mounted device 12, and in a case that device identity authentication of the vehicle-mounted device 12 is successful, the device data of the vehicle-mounted device 12 may be obtained through the central control screen 11, for example, device data corresponding to a plurality of device action signals such as the turn-on signal corresponding to the action of turning on the vehicle-mounted monitor, the turn-off signal corresponding to the action of turning off the vehicle-mounted monitor, the camera shooting signal corresponding to the action of shooting the emergency video by using the vehicle-mounted monitor may be obtained; then the plurality of operation indication information corresponding to the device data are generated and sent to the central control screen 11, so that the plurality of operation indication information are displayed on the central control screen 11; and the operation indication information may be represented in a form of virtual buttons, for example, three virtual buttons may be arranged within a preset range of the central control screen 11 and respectively used for representing the corresponding action of turning on the vehicle-mounted monitor, the corresponding action of turning off the vehicle-mounted monitor, the corresponding action of shooting the emergency video by using the vehicle-mounted monitor, and the like.

The central control screen 11 may be configured to generate the device operation instruction in response to the selection operation performed by the user for the plurality of operation indication information and send the device operation instruction to the vehicle-mounted device 12 through the external interface.

For example, the central control screen 11 may be arranged as a touch screen, and after the plurality of operation indication information are displayed on the central control screen 11, the operation indication information selected by the user may be determined by determining a position, touched by the user, of the touch screen; and after the operation indication information selected by the user is determined, the corresponding device operation instruction may be determined according to the selected operation indication information, for example, in a case that the operation indication information selected by the user is determined as turning on the vehicle-mounted monitor, the corresponding device operation instruction may be determined as an instruction A, and the instruction A may be sent to the vehicle-mounted monitor through the external interface, where the instruction A is used for indicating to turn on the vehicle-mounted monitor.

The vehicle-mounted device 12 may be configured to execute a device operation corresponding to the device operation instruction.

Through the above technical solution, the central control screen 11 of the vehicle includes a plurality of external interfaces, the vehicle-mounted device 12 is connected with the vehicle control apparatus 13 through the external interface of the central control screen 11, and the central control screen 11 generates the device operation instruction in response to the selection operation performed by the user for the plurality of operation indication information, so as to control the connected vehicle-mounted device 12, thus control over the vehicle-mounted device 12 may be implemented through the external interface by means of the central control screen, and use experience of the user is improved.

In some examples, the vehicle-mounted device 12 may be further configured to send device authentication information of the vehicle-mounted device 12 to the vehicle control apparatus 13 through the central control screen 11.

The device authentication information of the vehicle-mounted device 12 may include a device ID of the vehicle-mounted device 12.

For example, in a case that the vehicle-mounted device 12 is in wired connection with the vehicle control apparatus 13 through the external interface of the central control screen 11, the vehicle-mounted device 12 may use its own device ID as the corresponding device authentication information and send the device authentication information to the vehicle control apparatus 13 through the central control screen 11.

The vehicle control apparatus 13 may be further configured to perform device authentication on the vehicle-mounted device 12 according to the device authentication information.

The device authentication may be used for representing and determining whether the vehicle-mounted device 12 is a to-be-connected device of the vehicle.

For example, a device connection whitelist may be stored in the vehicle control apparatus 13, and the device connection whitelist may be used for representing a device capable of being connected with the vehicle control apparatus 13, for example, the device capable of being connected with the vehicle control apparatus 13 may include a device historically and successfully connected with the vehicle control apparatus 13.

In a case that the vehicle control apparatus 13 obtains the device authentication information sent by the vehicle-mounted device 12, the vehicle control apparatus 13 may search for the device authentication information in the device connection whitelist; in a case that it is determined that the device authentication information exists in the device connection whitelist, it may be determined that authentication of the vehicle-mounted device 12 corresponding to the device authentication information is successful; and in a case that it is determined that the device authentication information does not exist in the device connection whitelist, it may be determined that authentication of the vehicle-mounted device 12 corresponding to the device authentication information fails.

It needs to be noted that in a case that the vehicle-mounted device 12 is connected with the vehicle control apparatus 13 for the first time, the device authentication information of the vehicle-mounted device 12 may be sent to the central control screen 11, the device authentication information is displayed on a display interface of the central control screen 11, so as to prompt the user that the device is connected for the first time, and whether the device authentication information of the vehicle-mounted device 12 is added into the device connection whitelist is determined.

Through the above technical solution, in a case that the vehicle-mounted device 12 is in wired connection with the vehicle control apparatus 13 through the external interface of the central control screen 11, firstly, identity authentication is performed on the connected vehicle-mounted device 12, so a device of someone else is prevented from accessing, and access security of the device is improved.

In some examples, the vehicle-mounted device 12 may be further configured to send device connection status information periodically to the vehicle control apparatus 13 through the central control screen 11 in a case that authentication of the vehicle-mounted device 12 is successful.

The device connection status information is used for indicating that connection between the vehicle-mounted device 12 and the vehicle control apparatus 13 is normal.

For example, firstly, it may be determined that authentication of the vehicle-mounted device 12 is successful, in a case that the vehicle control apparatus 13 determines that the device authentication information exists in the device connection whitelist, the vehicle control apparatus 13 may send connection response information to the connected vehicle-mounted device 12 through the external interface of the central control screen 11, and the connection response information is used for indicating that device authentication of the vehicle-mounted device 12 is successful; and then in a case that the vehicle-mounted device 12 receives the connection response information sent by the vehicle control apparatus 13, the vehicle-mounted device 12 may periodically send the device connection status information including a device ID to the vehicle control apparatus 13 through the central control screen 11, so as to indicate to the vehicle control apparatus 13 that the vehicle-mounted device 12 is on-line in communication connection.

By using the above technical solution, it may be determined periodically that the vehicle-mounted device 12 is on-line in communication connection, so a situation that the vehicle-mounted device 12 is disconnected in communication while the user controls the vehicle-mounted device 12, leading to failure in device control is prevented.

In some examples, the vehicle control apparatus 13 may be further configured to send a power-off instruction to the vehicle-mounted device 12 through the central control screen 11 in a case that authentication of the vehicle-mounted device 12 fails.

For example, the vehicle control apparatus 13 may send the power-off instruction to the vehicle-mounted device 12 through the central control screen 11 in a case that it is determined that the device authentication information does not exist in the device connection whitelist, so as to indicate the device to power off.

The vehicle-mounted device 12 may be further configured to power off according to the power-off instruction.

In this way, in a case that it is determined that the vehicle-mounted device 12 is not the to-be-connected device of the vehicle, the vehicle-mounted device 12 may be indicated to power off.

In some examples, the vehicle control apparatus 13 may be further configured to supply power to the vehicle-mounted device 12 according to preset power through the external interface of the central control screen 11 in a case that authentication of the vehicle-mounted device 12 fails.

For example, the vehicle control apparatus 13 may merely charge the vehicle-mounted device 12 according to the preset power in a case that it is determined that the device authentication information does not exist in the device connection whitelist.

Fig. 2 is a flowchart of a device control method shown according to an example. As shown in Fig. 2, the method is applied to a vehicle-mounted device in a device control system. The device control system includes: a central control screen, the vehicle-mounted device and a vehicle control apparatus. The central control screen includes a plurality of external interfaces, and the central control screen is connected with the vehicle-mounted device through the plurality of external interfaces; and the vehicle control apparatus is connected with the central control screen. The method includes the following steps.

In step S11, a device operation instruction sent by the central control screen is received through the external interface.

The device operation instruction is an operation instruction generated by the central control screen in response to a selection operation performed by a user for a plurality of operation indication information, and the operation indication information is indication information generated by the vehicle control apparatus according to obtained device data of the vehicle-mounted device.

The central control screen may be arranged on a dashboard inside a vehicle and used for displaying internal data of the vehicle and realizing an entertainment function, for example, displaying a vehicle speed, performing driving navigation, and the like. The plurality of external interfaces may be arranged in peripheral side surfaces of the central control screen and may be used for being in wired and/or wireless connection with the vehicle-mounted device, the central control screen and the vehicle control apparatus may be connected through a controller area network (CAN) bus inside the vehicle, so that the vehicle-mounted device may be connected with the vehicle control apparatus through the central control screen, the vehicle control apparatus may include an on board unit, and the on board unit can implement people-to-vehicle and vehicle-to-outside (vehicle-to-vehicle) information communication in terms of functions. In this way, a plurality of vehicle-mounted devices may be connected with the vehicle at the same time, and interconnection efficiency is improved.

In this step, firstly, the vehicle-mounted device may establish wired and/or wireless connection with the central control screen through the external interface, and may then receive, through the external interface, a device operation instruction sent by the central control screen. The device operation instruction may be a device operation instruction generated by the central control screen in response to the selection operation triggered by the user based on the plurality of displayed operation indication information.

In step S12, a device operation corresponding to the device operation instruction is executed according to the device operation instruction.

By using the above technical solution, through the device operation instruction sent by the central control screen, the vehicle-mounted device is controlled to execute the device operation corresponding to the device operation instruction, in this way, the connected vehicle-mounted device may be controlled through the central control screen, so control over the vehicle-mounted device may be implemented through the central control screen, and use experience of the user is improved.

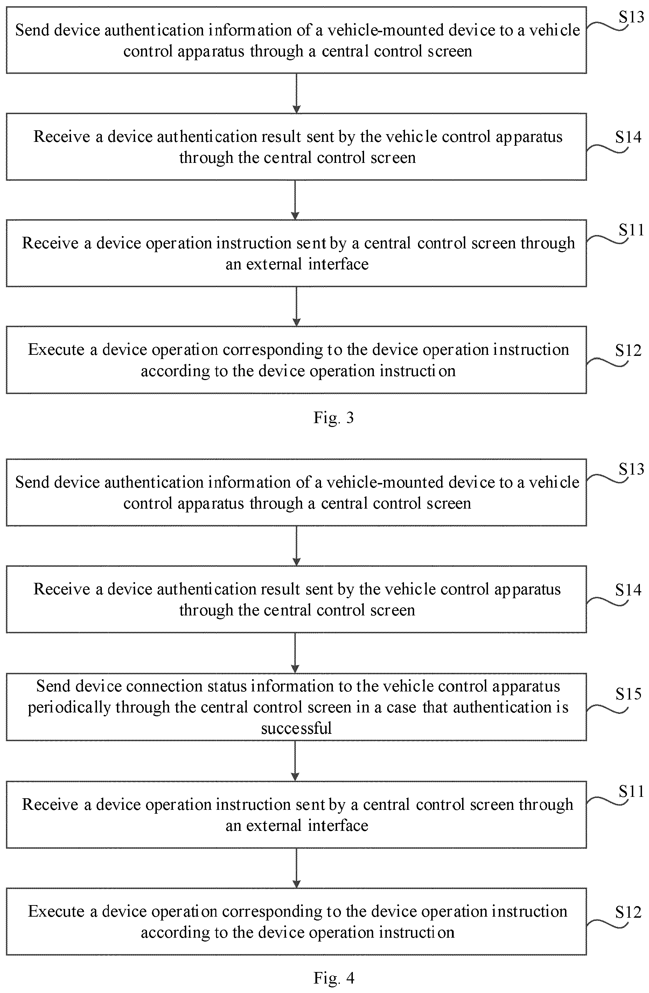

In some examples, Fig. 3 is a flowchart of another device control method shown according to the example shown in Fig. 2. As shown in Fig. 3, before above step S11, the method may further include the following steps.

In step S13, device authentication information of the vehicle-mounted device is sent to the vehicle control apparatus through the central control screen.

The vehicle-mounted device may include a vehicle-mounted monitor, a phone holder, an ambient light and other external devices used for being connected with the vehicle. The device authentication information of the vehicle-mounted device may include a device ID of the vehicle-mounted device.

For example, in a case that the vehicle-mounted device is in wired and/or wireless connection with the vehicle control apparatus through the external interface of the central control screen, the vehicle-mounted device may use its own device ID as the corresponding device authentication information and send the device authentication information to the vehicle control apparatus through the central control screen.

In step S14, a device authentication result sent by the vehicle control apparatus through the central control screen is received.

The device authentication result is used for indicating whether the vehicle-mounted device is a to-be-connected device.

For example, firstly, the vehicle control apparatus may perform device authentication on the vehicle-mounted device according to the device authentication information, for example, a device connection whitelist may be stored in the vehicle control apparatus, the device connection whitelist may be used for representing a device capable of being connected with the vehicle control apparatus, and the vehicle control apparatus may search for the device authentication information in the device connection whitelist in a case that the vehicle control apparatus obtains the device authentication information sent by the vehicle-mounted device; in a case that it is determined that the device authentication information exists in the device connection whitelist, it may be determined that authentication of the vehicle-mounted device corresponding to the device authentication information is successful; and then in a case that the vehicle control apparatus determines that authentication of the vehicle-mounted device is successful, the vehicle control apparatus returns the device authentication result to the vehicle-mounted device, and the vehicle-mounted device may receive, through the central control screen, the device authentication result sent by the vehicle control apparatus.

In this way, in a case that the vehicle-mounted device is in wired and/or wireless connection with the vehicle control apparatus through the external interface of the central control screen, firstly, identity authentication is performed on the connected vehicle-mounted device, so a device of someone else is prevented from accessing, and access security of the device is improved.

In some examples, Fig. 4 is a flowchart of another device control method shown according to the example shown in Fig. 3. As shown in Fig. 4, after above step S14, the method may further include the following steps.

In step S15, in a case that authentication is successful, device connection status information is sent to the vehicle control apparatus periodically through the central control screen.

The device connection status information is used for indicating that connection between the vehicle-mounted device and the vehicle control apparatus is normal.

For example, in a case that the vehicle-mounted device receives the device authentication result sent by the vehicle control apparatus through the central control screen, the vehicle-mounted device may determine that authentication of the vehicle-mounted device is successful through the device authentication result and may then periodically send the device connection status information including a device ID to the vehicle control apparatus through the central control screen, so as to indicate to the vehicle control apparatus that the vehicle-mounted device is on-line in communication connection.

In this way, it may be determined periodically that the vehicle-mounted device is on-line in communication connection, so a situation that the vehicle-mounted device is disconnected in communication while the user controls the vehicle-mounted device, leading to failure in device control is prevented.

In some examples, in a case that authentication fails, a power-off instruction sent by the vehicle control apparatus through the central control screen is received, and powering-off is performed according to the power-off instruction.

For example, in a case that the vehicle-mounted device receives the device authentication result sent by the vehicle control apparatus through the central control screen, it may be determined that authentication of the vehicle-mounted device fails through the device authentication result, then the power-off instruction sent by the vehicle control apparatus may be received, and powering-off is performed according to the power-off instruction.

In this way, in a case that it is determined that the vehicle-mounted device is not the to-be-connected device of the vehicle, the vehicle-mounted device may be indicated to power off.

In some examples, in a case that authentication fails, charging is performed according to an electric quantity of preset power transmitted through the external interface.

For example, in a case that the vehicle-mounted device receives the device authentication result sent by the vehicle control apparatus through the central control screen, the vehicle-mounted device may determine that authentication of the vehicle-mounted device fails through the device authentication result and then may be charged according to the electric quantity of the preset power transmitted through the external interface.

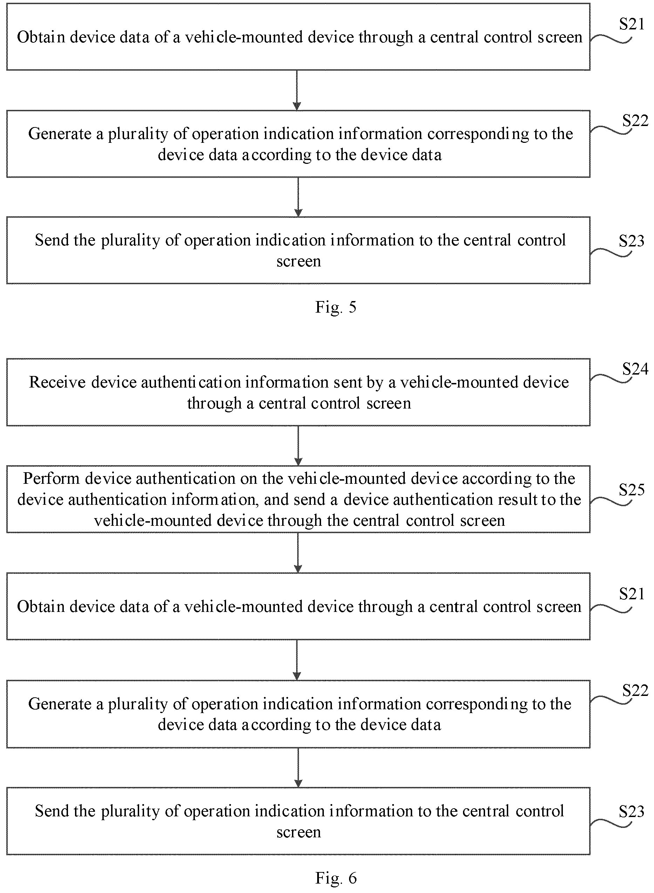

Fig. 5 is a flowchart of a device control method shown according to an example. As shown in Fig. 5, the method is applied to a vehicle control apparatus in a device control system. The device control system includes: a central control screen, a vehicle-mounted device and the vehicle control apparatus. The central control screen includes a plurality of external interfaces, and the central control screen is connected with the vehicle-mounted device through the plurality of external interfaces; and the vehicle control apparatus is connected with the central control screen. The method includes the following steps.

In step S21, device data of the vehicle-mounted device is obtained through the central control screen.

The vehicle-mounted device may include a vehicle-mounted monitor, a phone holder, an ambient light and other external devices used for being connected with the vehicle. The device data of the vehicle-mounted device may include some corresponding device action signals in a case that the vehicle-mounted device performs device actions, for example, a turn-on signal corresponding to an action of turning on the vehicle-mounted monitor, a turn-off signal corresponding to an action of turning off the vehicle-mounted monitor, a camera shooting signal corresponding to an action of shooting an emergency video by using the vehicle-mounted monitor, and the like.

For example, the vehicle control apparatus may firstly establish a communication connection with the central control screen through a CAN bus inside a vehicle, in a case that the vehicle-mounted device is connected with the vehicle control apparatus through the external interface of the central control screen, the vehicle control apparatus may perform device identity authentication on the vehicle-mounted device firstly, and in a case that device identity authentication of the vehicle-mounted device is successful, the device data of the vehicle-mounted device may be obtained through the central control screen, for example, device data of a plurality of device action signals such as the turn-on signal corresponding to the action of turning on the vehicle-mounted monitor, the turn-off signal corresponding to the action of turning off the vehicle-mounted monitor, the camera shooting signal corresponding to the action of shooting the emergency video by using the vehicle-mounted monitor may be obtained.

In step S22, a plurality of operation indication information corresponding to the device data are generated according to the device data.

The operation indication information may be represented in a form of virtual buttons, for example, three virtual buttons may be arranged within a preset range of the central control screen and respectively used for representing the corresponding action of turning on the vehicle-mounted monitor, the corresponding action of turning off the vehicle-mounted monitor, the corresponding action of shooting the emergency video by using the vehicle-mounted monitor, and the like.

In step S23, the plurality of operation indication information are sent to the central control screen.

Optionally, the vehicle control apparatus, after generating the plurality of operation indication information, may send the plurality of operation indication information to the central control screen, so that the plurality of operation indication information are displayed on the central control screen.

In this way, a plurality of device actions to be executed by the vehicle-mounted device may be displayed on a display interface of the central control screen in a form of operation indication information, so the user can control the vehicle-mounted device by controlling the central control screen.

In some examples, Fig. 6 is a flowchart of another device control method shown according to the example shown in Fig. 5. As shown in Fig. 6, before above step S21, the method may further include the following steps.

In step S24, the device authentication information sent by the vehicle-mounted device through the central control screen is received.

In step S25, device authentication is performed on the vehicle-mounted device according to the device authentication information, and the device authentication result is sent to the vehicle-mounted device through the central control screen. The device authentication result is used for indicating whether the vehicle-mounted device is the to-be-connected device.

In this way, in a case that the vehicle-mounted device is in wired and/or wireless connection with the vehicle control apparatus through the external interface of the central control screen, firstly, identity authentication is performed on the connected vehicle-mounted device, so a device of someone else is prevented from accessing, and access security of the device is improved.

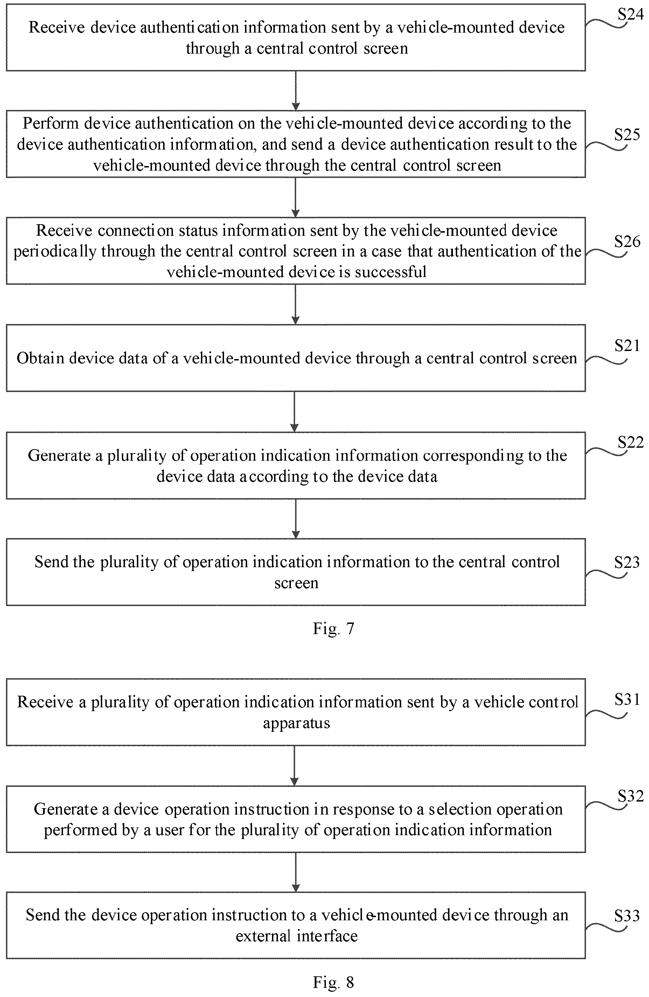

In some examples, Fig. 7 is a flowchart of another device control method shown according to the example shown in Fig. 6. As shown in Fig. 7, after above step S25, the method may further include the following steps.

In step S26, in a case that authentication of the vehicle-mounted device is successful, device connection status information sent by the vehicle-mounted device periodically through the central control screen is received.

The device connection status information is used for indicating that connection between the vehicle-mounted device and the vehicle control apparatus is normal.

Optionally, in a case that the vehicle control apparatus determines that the device authentication information exists in the device connection whitelist, the vehicle control apparatus may send connection response information to the connected vehicle-mounted device through the external interface of the central control screen, and the connection response information is used for indicating that device authentication of the vehicle-mounted device is successful; and in a case that the vehicle-mounted device receives the connection response information sent by the vehicle control apparatus, the vehicle-mounted device may periodically send the device connection status information including a device ID to the vehicle control apparatus through the central control screen, so as to indicate to the vehicle control apparatus that the vehicle-mounted device is on-line in communication connection.

In step S27, it is determined that connection between the vehicle-mounted device and the vehicle control apparatus is normal according to the device connection status information.

For example, in a case that the vehicle control apparatus periodically receives the device connection status information sent by the vehicle-mounted device, it may be determined that connection between the vehicle-mounted device and the vehicle control apparatus is normal.

In this way, it may be determined periodically that the vehicle-mounted device is on-line in communication connection, so a situation that the vehicle-mounted device is disconnected in communication while the user controls the vehicle-mounted device, leading to failure in device control is prevented.

In some examples, in a case that authentication of the vehicle-mounted device fails, a power-off instruction is sent to the vehicle-mounted device through the central control screen. The power-off instruction is used for indicating the vehicle-mounted device to power off according to the power-off instruction.

In some examples, in a case that authentication of the vehicle-mounted device fails, power is supplied to the vehicle-mounted device according to preset power through the external interface of the central control screen.

Fig. 8 is a flowchart of a device control method shown according to an example. As shown in Fig. 8, the method is applied to a central control screen in a device control system. The device control system includes: the central control screen, a vehicle-mounted device and a vehicle control apparatus, the central control screen includes a plurality of external interfaces, and the central control screen is connected with the vehicle-mounted device through the plurality of external interfaces; and the vehicle control apparatus is connected with the central control screen. The method includes the following steps.

In step S31, a plurality of operation indication information sent by the vehicle control apparatus are received.

The operation indication information is indication information generated by the vehicle control apparatus according to obtained device data of the vehicle-mounted device.

Optionally, after receiving the plurality of operation indication information sent by the vehicle control apparatus, the plurality of operation indication information may be displayed on a display interface of the central control screen, so as to display the plurality of operation indication information on the central control screen.

In step S32, a device operation instruction is generated in response to a selection operation performed by a user for the plurality of operation indication information.

For example, the central control screen may be arranged as a touch screen, and after the plurality of operation indication information are displayed on the central control screen, the operation indication information selected by the user may be determined by determining a position, touched by the user, of the touch screen; and after the operation indication information selected by the user is determined, the corresponding device operation instruction may be determined according to the selected operation indication information, for example, in a case that the operation indication information selected by the user is determined as turning on a vehicle-mounted monitor, the corresponding device operation instruction may be determined as an instruction A, and the instruction A may be sent to the vehicle-mounted monitor through the external interface, where the instruction A is used for indicating to turn on the vehicle-mounted monitor.

In step S33, the device operation instruction is sent to the vehicle-mounted device through the external interface. The device operation instruction is used for indicating the vehicle-mounted device to execute a device operation corresponding to the device operation instruction.

In this way, the central control screen of a vehicle includes a plurality of external interfaces, the vehicle-mounted device is connected with the vehicle control apparatus through the external interface of the central control screen, and the central control screen generates the device operation instruction in response to the selection operation performed by the user for the plurality of operation indication information, so as to control the connected vehicle-mounted device, thus control over the vehicle-mounted device may be implemented through the central control screen, and use experience of the user is improved.

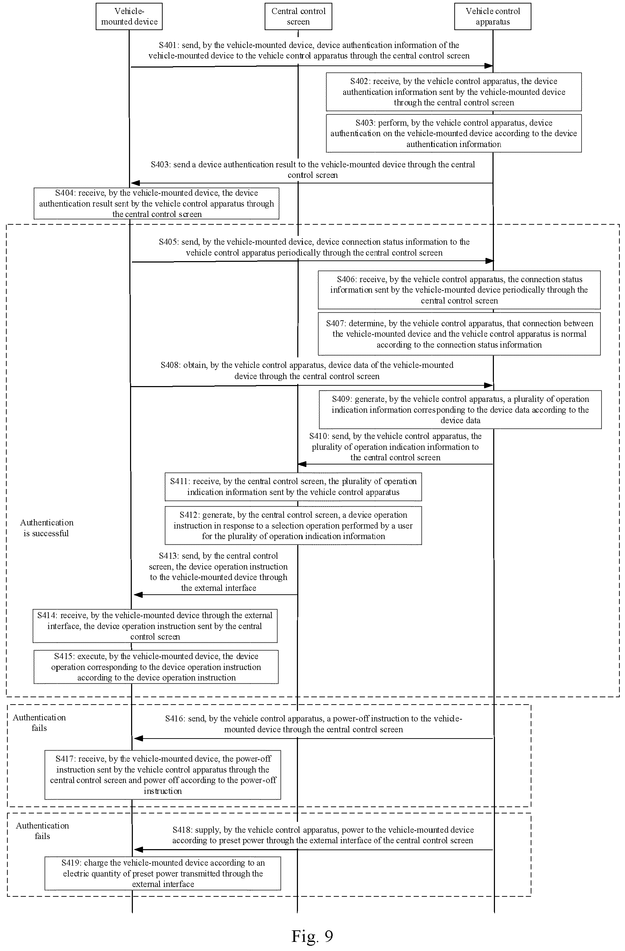

Fig. 9 is a flowchart of another device control method shown according to an example. As shown in Fig, 9, the method is applied to a device control system. The device control system includes: a central control screen, a vehicle-mounted device and a vehicle control apparatus, the central control screen includes a plurality of external interfaces, and the central control screen is connected with the vehicle-mounted device through the plurality of external interfaces; and the vehicle control apparatus is connected with the central control screen. The method includes the following steps.

In step S401, the vehicle-mounted device sends device authentication information of the vehicle-mounted device to the vehicle control apparatus through the central control screen.

In step S402, the vehicle control apparatus receives the device authentication information sent by the vehicle-mounted device through the central control screen.

In step S403, the vehicle control apparatus performs device authentication on the vehicle-mounted device according to the device authentication information and sends a device authentication result to the vehicle-mounted device through the central control screen.

The device authentication result is used for indicating whether the vehicle-mounted device is a to-be-connected device.

In step S404, the vehicle-mounted device receives the device authentication result sent by the vehicle control apparatus through the central control screen.

In a case that authentication of the vehicle-mounted device is successful, steps S405 to S415 are executed.

In a case that authentication of the vehicle-mounted device fails, steps S416 to S417 are executed, or steps S418 to S419 are executed.

In step S405, the vehicle-mounted device sends device connection status information to the vehicle control apparatus periodically through the central control screen.

The device connection status information is used for indicating that connection between the vehicle-mounted device and the vehicle control apparatus is normal.

In step S406, the vehicle control apparatus receives the device connection status information sent by the vehicle-mounted device periodically through the central control screen.

In step S407, the vehicle control apparatus determines that connection between the vehicle-mounted device and the vehicle control apparatus is normal according to the device connection status information.

In step S408, the vehicle control apparatus obtains device data of the vehicle-mounted device through the central control screen.

In step S409, the vehicle control apparatus generates a plurality of operation indication information corresponding to the device data according to the device data.

The operation indication information is indication information generated by the vehicle control apparatus according to the obtained device data of the vehicle-mounted device.

In step S410, the vehicle control apparatus sends the plurality of operation indication information to the central control screen.

In step S411, the central control screen receives the plurality of operation indication information sent by the vehicle control apparatus.

In step S412, the central control screen generates a device operation instruction in response to a selection operation performed by a user for the plurality of operation indication information.

The device operation instruction is used for indicating the vehicle-mounted device to execute a device operation corresponding to the device operation instruction.

In step S413, the central control screen sends the device operation instruction to the vehicle-mounted device through the external interface.

In step S414, the vehicle-mounted device receives, through the external interface, the device operation instruction sent by the central control screen.

In step S415, the vehicle-mounted device executes the device operation corresponding to the device operation instruction according to the device operation instruction.

In step S416, the vehicle control apparatus sends a power-off instruction to the vehicle-mounted device through the central control screen.

The power-off instruction is used for indicating the vehicle-mounted device to power off according to the power-off instruction.

In step S417, the vehicle-mounted device receives the power-off instruction sent by the vehicle control apparatus through the central control screen and powers off according to the power-off instruction.

In step S418, the vehicle control apparatus supplies power to the vehicle-mounted device according to preset power through the external interface of the central control screen.

In step S419, the vehicle-mounted device is charged according to an electric quantity of preset power transmitted through the external interface.

In this way, the central control screen of a vehicle includes a plurality of external interfaces, the vehicle-mounted device is connected with the vehicle control apparatus through the external interface of the central control screen, and the central control screen generates the device operation instruction in response to the selection operation performed by the user for the plurality of operation indication information, so as to control the connected vehicle-mounted device, thus control over the vehicle-mounted device may be implemented through the central control screen, and use experience of the user is improved.

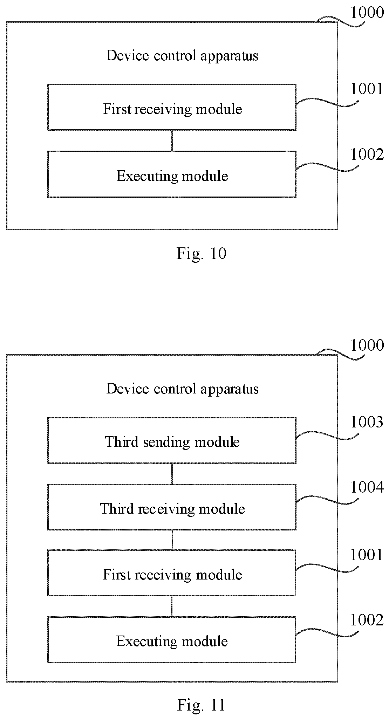

Fig. 10 is a block diagram of a device control apparatus shown according to an example. As shown in Fig. 10, the apparatus is applied to a device control system. The device control system includes: a central control screen, a vehicle-mounted device and a vehicle control apparatus, the central control screen includes a plurality of external interfaces, and the central control screen is connected with the vehicle-mounted device through the plurality of external interfaces; and the vehicle control apparatus is connected with the central control screen. The apparatus includes:
a first receiving module 1001, configured to receive, through the external interface, a device operation instruction sent by the central control screen, the device operation instruction being an operation instruction generated by the central control screen in response to a selection operation performed by a user for a plurality of operation indication information, and the operation indication information being indication information generated by the vehicle control apparatus according to obtained device data of the vehicle-mounted device; and
an executing module 1002, configured to execute a device operation corresponding to the device operation instruction according to the device operation instruction.

Fig. 11 is a block diagram of another device control apparatus shown according to the example shown in Fig. 10. As shown in Fig. 11, the apparatus further includes:
a third sending module 1003, configured to send device authentication information of the vehicle-mounted device to the vehicle control apparatus through the central control screen; and
a third receiving module 1004, configured to receive a device authentication result sent by the vehicle control apparatus through the central control screen, the device authentication result being used for indicating whether the vehicle-mounted device is a to-be-connected device.

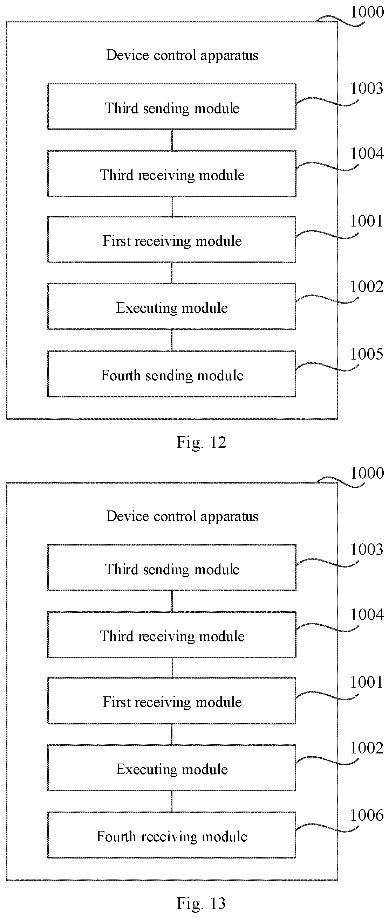

Fig. 12 is a block diagram of another device control apparatus shown according to the example shown in Fig. 11. As shown in Fig. 12, the apparatus further includes:
a fourth sending module 1005, configured to send device connection status information periodically to the vehicle control apparatus through the central control screen in a case that authentication is successful, the device connection status information being used for indicating that connection between the vehicle control apparatus and the vehicle control apparatus is normal.

Fig. 13 is a block diagram of another device control apparatus shown according to the example shown in Fig. 11. As shown in Fig. 13, the apparatus further includes:
a fourth receiving module 1006, configured to receive a power-off instruction sent by the vehicle control apparatus through the central control screen in a case that authentication fails, and power off according to the power-off instruction.

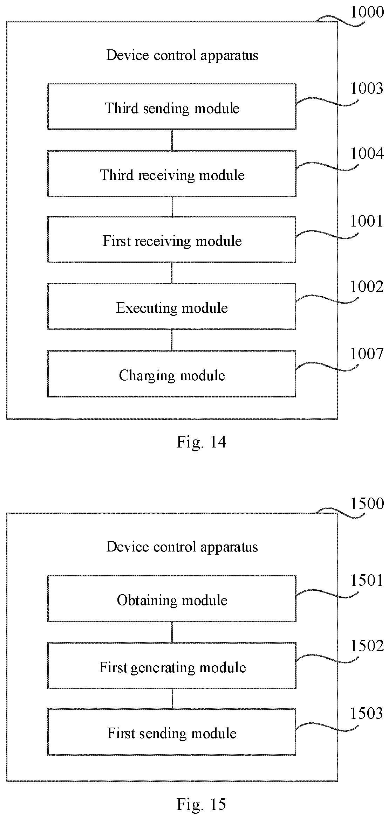

Fig. 14 is a block diagram of another device control apparatus shown according to the example shown in Fig. 11. As shown in Fig. 14, the apparatus further includes:
a charting module 1007, configured to perform charging according to an electric quantity of preset power transmitted through the external interface in a case that authentication fails.

Fig. 15 is a block diagram of a device control apparatus shown according to an example. As shown in Fig. 15, the apparatus is applied to a device control system. The device control system includes: a central control screen, a vehicle-mounted device and a vehicle control apparatus, the central control screen includes a plurality of external interfaces, and the central control screen is connected with the vehicle-mounted device through the plurality of external interfaces; and the vehicle control apparatus is connected with the central control screen. The apparatus includes:
an obtaining module 1501, configured to obtain device data of the vehicle-mounted device through the central control screen;
a first generating module 1502, configured to generate a plurality of operation indication information corresponding to the device data according to the device data; and
a first sending module 1503, configured to send the plurality of operation indication information to the central control screen.

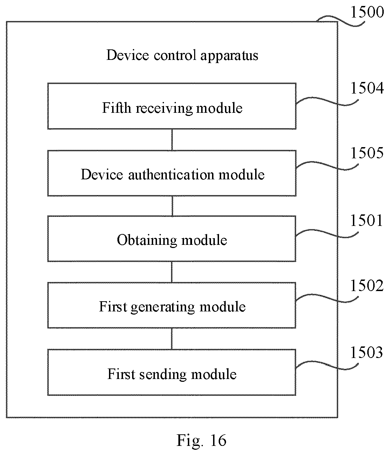

Fig. 16 is a block diagram of another device control apparatus shown according to the example shown in Fig. 15. As shown in Fig. 16, the apparatus further includes:
a fifth receiving module 1504, configured to receive device authentication information sent by the vehicle-mounted device through the central control screen; and
a device authentication module 1505, configured to perform device authentication on the vehicle-mounted device according to the device authentication information, and send a device authentication result to the vehicle-mounted device through the central control screen, the device authentication result being used for indicating whether the vehicle-mounted device is a to-be-connected device.

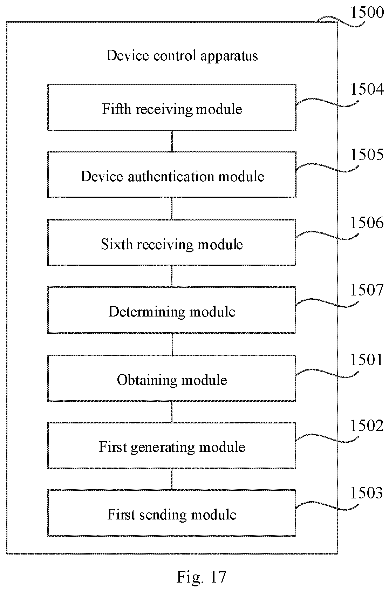

Fig. 17 is a block diagram of another device control apparatus shown according to the example shown in Fig. 16. As shown in Fig. 17, the apparatus further includes:
a sixth receiving module 1506, configured to receive device connection status information sent periodically by the vehicle-mounted device through the central control screen in a case that authentication of the vehicle-mounted device is successful, the device connection status information being used for indicating that connection between the vehicle-mounted device and the vehicle control apparatus is normal; and
a determining module 1507, configured to determine, according to the device connection status information, that connection between the vehicle-mounted device and the vehicle control apparatus is normal.

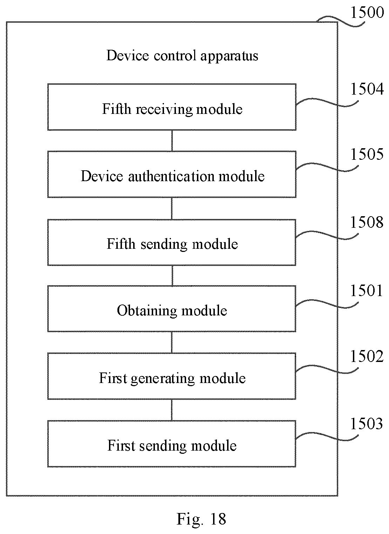

Fig. 18 is a block diagram of another device control apparatus shown according to the example shown in Fig. 16. As shown in Fig. 18, the apparatus further includes:
a fifth sending module 1508, configured to send, through the central control screen, a power-off instruction to the vehicle-mounted device in a case that authentication of the vehicle-mounted device fails, the power-off instruction being used for indicating the vehicle-mounted device to power off according to the power-off instruction.

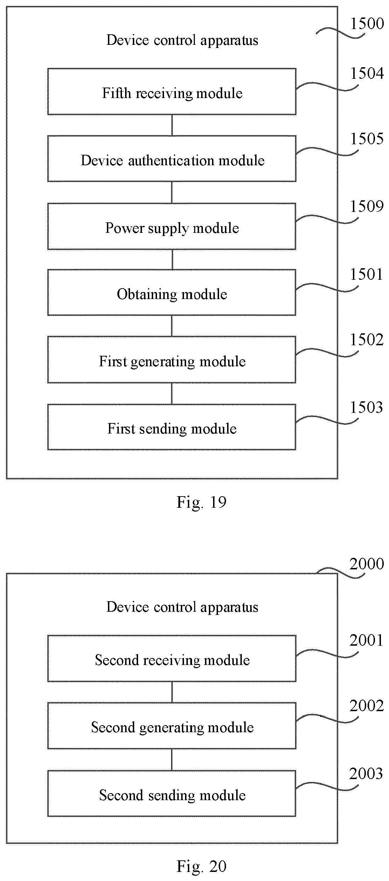

Fig. 19 is a block diagram of another device control apparatus shown according to the example shown in Fig. 16. As shown in Fig. 19, the apparatus further includes:
a power supply module 1509, configured to supply power to the vehicle-mounted device according to preset power through the external interface of the central control screen in a case that authentication of the vehicle-mounted device fails.

Fig. 20 is a block diagram of a device control apparatus shown according to an example. As shown in Fig. 20, the apparatus is applied to a device control system. The device control system includes: a central control screen, a vehicle-mounted device and a vehicle control apparatus, the central control screen includes a plurality of external interfaces, and the central control screen is connected with the vehicle-mounted device through the plurality of external interfaces; and the vehicle control apparatus is connected with the central control screen. The apparatus includes:
a second receiving module 2001, configured to receive a plurality of operation indication information sent by the vehicle control apparatus, the operation indication information being indication information generated by the vehicle control apparatus according to obtained device data of the vehicle-mounted device;
a second generating module 2002, configured to generate a device operation instruction in response to a selection operation performed by a user for the plurality of operation indication information; and
a second sending module 2003, configured to send the device operation instruction to the vehicle-mounted device through the external interface, the device operation instruction being used for indicating the vehicle-mounted device to execute a device operation corresponding to the device operation instruction.

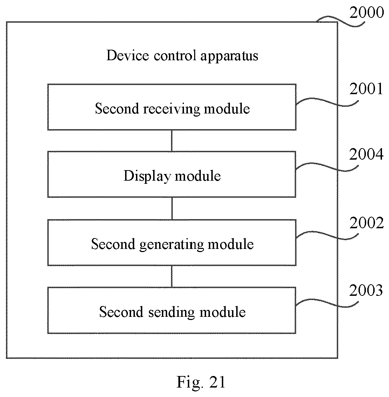

Fig. 21 is a block diagram of another device control apparatus shown according to the example in Fig. 20. As shown in Fig. 21, the apparatus further includes:
a display module 2004, configured to display the plurality of operation indication information.

By adopting the above solutions, the central control screen of the vehicle includes a plurality of external interfaces, the vehicle-mounted device is connected with the vehicle control apparatus through the external interface of the central control screen, and the central control screen generates the device operation instruction in response to the selection operation performed by the user for the plurality of operation indication information, so as to control the connected vehicle-mounted device, thus control over the vehicle-mounted device may be implemented through the central control screen, and use experience of the user is improved.

As for the apparatus in the above examples, a specific mode of each module for executing an operation has been described in detail in the example related to the method, which is not described in detail here.

The disclosure further provides a computer-readable storage medium, storing a computer program instruction, the program instruction, when executed by a processor, implementing steps of the device control method provided by the disclosure.

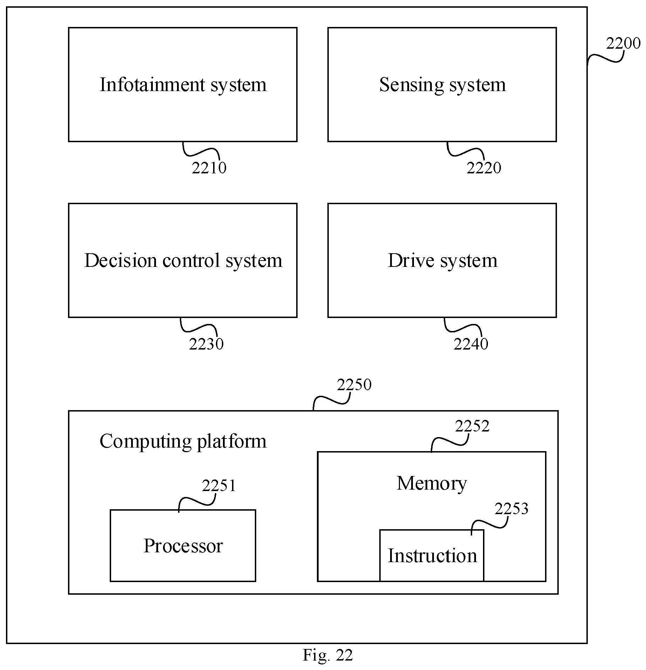

Fig. 22 is a block diagram of a vehicle 2200 show according to an example. For example, the vehicle 2200 may be a hybrid vehicle, and may also be a non-hybrid vehicle, an electric vehicle, a fuel cell vehicle or other types of vehicles. The vehicle 2200 may be an autonomous vehicle, a semi-autonomous vehicle or a non-autonomous vehicle.

Referring to Fig. 22, the vehicle 2200 may include various sub-systems, for example, an infotainment system 2210, a sensing system 2220, a decision control system 2230, a drive system 2240 and a computing platform 2250. The vehicle 2200 may further include more or less sub-systems, and each sub-system may include a plurality of components. Besides, all the sub-systems as well as all the components of the vehicle 2200 may be connected in a wired or wireless mode.

In some examples, the infotainment system 2210 may include a communication system, an entertainment system, a navigation system and the like.

The sensing system 2220 may include several sensors configured to sense information of an environment around the vehicle 2200. For example, the sensing system 2220 may include a global positioning system (the global positioning system may be a GPS, and may also be a Beidou system or other positioning systems), an inertial measurement unit (IMU), laser radar, millimeter-wave radar, ultrasonic radar and a camera device.

The decision control system 2230 may include a computing system, a vehicle control unit, a steering system, an accelerator and a braking system.

The drive system 2240 may include an assembly for providing power for the vehicle 2200 to move. In an example, the drive system 2240 may include an engine, an energy source, a transmission system and wheels. The engine may be one of an internal-combustion engine, an electric motor or a compressed air engine, or a combination of some of them. The engine can convert energy provided by the energy source to mechanical energy.

Some or all functions of the vehicle 2200 are controlled by the computing platform 2250. The computing platform 2250 may include at least one processor 2251 and a memory 2252, and the processor 2251 may execute an instruction 2253 stored in the memory 2252.

The processor 2251 may be any conventional processor, such as a commercially available CPU. The processor may further include, for example, a graphic process unit (GPU), a field programmable gate array (FPGA), a system on chip (SOC), an application specific integrated circuit (ASIC) or a combination of them.

The memory 2252 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or a compact disc.

In addition to the instruction 2253, the memory 2252 may further store data, for example, a road map, route information, a location, an orientation and a speed of a vehicle, and other data. The data stored in the memory 2252 may be utilized by the computing platform 2250.

In the example of the disclosure, the processor 2251 may execute the instruction 2253, so as to complete all or some steps of the above device control method.

In another example, a computer program product is further provided, the computer program product includes a computer program capable of being executed by a programmable apparatus, and the computer program has a code part which is used for executing, when executed by the programmable apparatus, the above device control method.

## Claims

1. A device control system (1), comprising: a central control screen (11), a vehicle-mounted device (12) and a vehicle control apparatus (13), wherein the central control screen (11) comprises a plurality of external interfaces, and the central control screen (11) is connected with the vehicle-mounted device (12) through the plurality of external interfaces; the vehicle control apparatus (13) is connected with the central control screen (11);
the vehicle control apparatus (13) is configured to obtain device data of the vehicle-mounted device (12) through the central control screen (11), generate a plurality of operation indication information corresponding to the device data and send the plurality of operation indication information to the central control screen (11);
the central control screen (11) is configured to generate a device operation instruction in response to a selection operation performed by a user for the plurality of operation indication information and send the device operation instruction to the vehicle-mounted device (12) through the external interface; and
the vehicle-mounted device (12) is configured to execute a device operation corresponding to the device operation instruction.

2. The device control system (1) according to claim 1, wherein
the vehicle-mounted device (12) is further configured to send device authentication information of the vehicle-mounted device (12) to the vehicle control apparatus (13) through the central control screen (11); and
the vehicle control apparatus (13) is configured to perform device authentication on the vehicle-mounted device (12) according to the device authentication information.

3. The device control system (1) according to claim 2, wherein
the vehicle-mounted device (12) is further configured to send device connection status information periodically to the vehicle control apparatus (13) through the central control screen (11) in a case that authentication of the vehicle-mounted device (12) is successful, the device connection status information being used for indicating that connection between the vehicle-mounted device (12) and the vehicle control apparatus (13) is normal.

4. The device control system (1) according to claim 2 or 3, wherein
the vehicle control apparatus (13) is further configured to send a power-off instruction to the vehicle-mounted device (12) through the central control screen (11) in a case that authentication of the vehicle-mounted device (12) fails; and
the vehicle-mounted device (12) is further configured to power off according to the power-off instruction.

5. The device control system (1) according to claim 2 or 3, wherein
the vehicle control apparatus (13) is further configured to supply power to the vehicle-mounted device (12) according to preset power through the external interface of the central control screen (11) in a case that authentication of the vehicle-mounted device (12) fails.

6. The device control system (1) according to any one of claims 1 to 5, wherein
the central control screen (11) is configured to display the plurality of operation indication information and generate, in response to a selection operation triggered by the user based on the plurality of displayed operation indication information, the device operation instruction.

7. A device control method, wherein the method is performed by a vehicle-mounted device (12) in a device control system (1), the device control system (1) comprises: a central control screen (11), the vehicle-mounted device (12) and a vehicle control apparatus (13), the central control screen (11) comprises a plurality of external interfaces, and the central control screen (11) is connected with the vehicle-mounted device (12) through the plurality of external interfaces; and the vehicle control apparatus (13) is connected with the central control screen (11), and the method comprises:
receiving (S11), through the external interface, a device operation instruction sent by the central control screen (11), the device operation instruction being an operation instruction generated by the central control screen (11) in response to a selection operation performed by a user for a plurality of operation indication information, and the operation indication information being indication information generated by the vehicle control apparatus (13) according to obtained device data of the vehicle-mounted device (12); and
executing (S12) a device operation corresponding to the device operation instruction according to the device operation instruction.

8. The method according to claim 7, wherein before receiving, through the external interface, the device operation instruction sent by the central control screen (11), the method further comprises:
sending (S13) device authentication information of the vehicle-mounted device (12) to the vehicle control apparatus (13) through the central control screen (11); and
receiving (S14) a device authentication result sent by the vehicle control apparatus (13) through the central control screen (11), the device authentication result being used for indicating whether the vehicle-mounted device (12) is a to-be-connected device.

9. The method according to claim 8, further comprising:
sending (S15) device connection status information periodically to the vehicle control apparatus (13) through the central control screen (11) in a case that authentication is successful, the device connection status information being used for indicating that connection between the vehicle-mounted device (12) and the vehicle control apparatus (13) is normal, or
receiving a power-off instruction sent by the vehicle control apparatus (13) through the central control screen (11) in a case that authentication fails, and powering off according to the power-off instruction, or
performing charging according to an electric quantity of preset power transmitted through the external interface in a case that authentication fails.

10. A device control method, wherein the method is performed by a vehicle control apparatus (13) in a device control system (1), the device control system (1) comprises: a central control screen (11), a vehicle-mounted device (12) and the vehicle control apparatus (13), the central control screen (11) comprises a plurality of external interfaces, and the central control screen (11) is connected with the vehicle-mounted device (12) through the plurality of external interfaces; and the vehicle control apparatus (13) is connected with the central control screen (11), and the method comprises:
obtaining (S21) device data of the vehicle-mounted device (12) through the central control screen (11);
generating (S22) a plurality of operation indication information corresponding to the device data according to the device data; and
sending (S23) the plurality of operation indication information to the central control screen (11).

11. The method according to claim 10, wherein before obtaining device data of the vehicle-mounted device (12) through the central control screen (11), the method further comprises:
receiving (S24) device authentication information sent by the vehicle-mounted device (12) through the central control screen (11); and
performing (S25) device authentication on the vehicle-mounted device (12) according to the device authentication information, and sending a device authentication result to the vehicle-mounted device (12) through the central control screen (11), the device authentication result being used for indicating whether the vehicle-mounted device (12) is a to-be-connected device.

12. The method according to claim 11, further comprising:
receiving (S26) device connection status information sent periodically by the vehicle-mounted device (12) through the central control screen (11) in a case that authentication of the vehicle-mounted device (12) is successful, the device connection status information being used for indicating that connection between the vehicle-mounted device (12) and the vehicle control apparatus (13) is normal; determining, according to the device connection status information, that connection between the vehicle-mounted device (12) and the vehicle control apparatus (13) is normal, or
sending, through the central control screen (11), a power-off instruction to the vehicle-mounted device (12) in a case that authentication of the vehicle-mounted device (12) fails, the power-off instruction being used for indicating the vehicle-mounted device (12) to power off according to the power-off instruction, or
supplying power to the vehicle-mounted device (12) according to preset power through the external interface of the central control screen (11) in a case that authentication of the vehicle-mounted device (12) fails.

13. A device control method, wherein the method is performed by a central control screen (11) in a device control system (1), the device control system (1) comprises: the central control screen (11), a vehicle-mounted device (12) and a vehicle control apparatus (13), the central control screen (11) comprises a plurality of external interfaces, and the central control screen (11) is connected with the vehicle-mounted device (12) through the plurality of external interfaces; and the vehicle control apparatus (13) is connected with the central control screen (11), and the method comprises:
receiving (S31) a plurality of operation indication information sent by the vehicle control apparatus (13), the operation indication information being indication information generated by the vehicle control apparatus (13) according to obtained device data of the vehicle-mounted device (12);
generating (S32) a device operation instruction in response to a selection operation performed by a user for the plurality of operation indication information; and
sending (S33) the device operation instruction to the vehicle-mounted device (12) through the external interface, the device operation instruction being used for indicating the vehicle-mounted device (12) to execute a device operation corresponding to the device operation instruction.

14. The method according to claim 13, wherein after receiving the plurality of operation indication information sent by the vehicle control apparatus (13), the method further comprises:
displaying the plurality of operation indication information.

15. A vehicle (2200), comprising the device control system (1) according to any one of claims 1 to 6.

## Patentansprüche

1. Vorrichtungssteuerungssystem (1), das aufweist: einen zentralen Steuerbildschirm (11), eine fahrzeugmontierte Vorrichtung (12) und eine Fahrzeugsteuerungseinrichtung (13), wobei der zentrale Steuerbildschirm (11) eine Vielzahl von externen Schnittstellen aufweist, und der zentrale Steuerbildschirm (11) über die Vielzahl von externen Schnittstellen mit der fahrzeugmontierten Vorrichtung (12) verbunden ist; die Fahrzeugsteuerungseinrichtung (13) mit dem zentralen Steuerbildschirm (11) verbunden ist;
wobei die Fahrzeugsteuerungseinrichtung (13) so ausgebildet ist, dass sie über den zentralen Steuerbildschirm (11) Vorrichtungsdaten der fahrzeugmontierten Vorrichtung (12) erhält, eine Vielzahl von Bedienungsanzeigeinformationen entsprechend den Vorrichtungsdaten erzeugt und die Vielzahl von Bedienungsanzeigeinformationen an den zentralen Steuerbildschirm (11) sendet;
wobei der zentrale Steuerbildschirm (11) so ausgebildet ist, dass er als Reaktion auf einen von einem Benutzer durchgeführten Auswahlvorgang für die Vielzahl von Bedienungsanzeigeinformationen eine Vorrichtungsbedienungsanweisung erzeugt und die Vorrichtungsbedienungsanweisung über die externe Schnittstelle an die fahrzeugmontierte Vorrichtung (12) sendet; und wobei die fahrzeugmontierte Vorrichtung (12) so ausgebildet ist, dass sie eine Vorrichtungsbedienung ausführt, die der Vorrichtungsbedienungsanweisung entspricht.

2. Vorrichtungssteuerungssystem (1) nach Anspruch 1, wobei
die fahrzeugmontierte Vorrichtung (12) ferner dazu ausgebildet ist, die Vorrichtungsauthentifizierungsinformationen der fahrzeugmontierten Vorrichtung (12) über den zentralen Steuerbildschirm (11) an die Fahrzeugsteuerungseinrichtung (13) zu senden; und
die Fahrzeugsteuerungseinrichtung (13) so ausgebildet ist, dass sie gemäß den Vorrichtungsauthentifizierungsinformationen eine Vorrichtungsauthentifizierung bei der fahrzeugmontierten Vorrichtung (12) durchführt.

3. Vorrichtungssteuerungssystem (1) nach Anspruch 2, wobei die fahrzeugmontierte Vorrichtung (12) ferner dazu ausgebildet ist, Informationen zum Verbindungsstatus der Vorrichtung periodisch über den zentralen Steuerbildschirm (11) an die Fahrzeugsteuerungseinrichtung (13) zu senden, in dem Fall, dass die Authentifizierung der fahrzeugmontierten Vorrichtung (12) erfolgreich ist, wobei die Informationen zum Verbindungsstatus der Vorrichtung dazu dienen, anzuzeigen, dass die Verbindung zwischen der fahrzeugmontierten Vorrichtung (12) und der Fahrzeugsteuerungseinrichtung (13) normal ist.

4. Vorrichtungssteuerungssystem (1) nach Anspruch 2 oder 3, wobei
die Fahrzeugsteuerungseinrichtung (13) ferner dazu ausgebildet ist, eine Ausschaltanweisung über den zentralen Steuerbildschirm (11) an die fahrzeugmontierte Vorrichtung (12) zu senden, in dem Fall, dass die Authentifizierung der fahrzeugmontierten Vorrichtung (12) fehlschlägt; und
die fahrzeugmontierte Vorrichtung (12) ferner so ausgebildet ist, dass sie sich gemäß der Ausschaltanweisung ausschaltet.

5. Vorrichtungssteuerungssystem (1) nach Anspruch 2 oder 3, wobei
die Fahrzeugsteuerungseinrichtung (13) ferner dazu ausgebildet ist, die fahrzeugmontierte Vorrichtung (12) gemäß einer voreingestellten Leistung über die externe Schnittstelle des zentralen Steuerbildschirms (11) mit Strom zu versorgen, in dem Fall, dass die Authentifizierung der fahrzeugmontierten Vorrichtung (12) fehlschlägt.

6. Vorrichtungssteuerungssystem (1) nach einem der Ansprüche 1 bis 5, wobei der zentrale Steuerbildschirm (11) so ausgelegt ist, dass er die Vielzahl von Bedienungsanzeigeinformationen anzeigt und als Reaktion auf einen vom Benutzer auf der Grundlage der Vielzahl der angezeigten Bedienungsanzeigeinformationen ausgelösten Auswahlvorgang die Vorrichtungsbedienungsanweisung erzeugt.

7. Vorrichtungssteuerungsverfahren, wobei das Verfahren von einer fahrzeugmontierten Vorrichtung (12) in einem Vorrichtungssteuerungssystem (1) durchgeführt wird, wobei das Vorrichtungssteuerungssystem (1) aufweist: einen zentralen Steuerbildschirm (11), die fahrzeugmontierte Vorrichtung (12) und eine Fahrzeugsteuerungseinrichtung (13), wobei der zentrale Steuerbildschirm (11) eine Vielzahl von externen Schnittstellen aufweist, und der zentrale Steuerbildschirm (11) über die Vielzahl von externen Schnittstellen mit der fahrzeugmontierten Vorrichtung (12) verbunden ist; und wobei die Fahrzeugsteuerungseinrichtung (13) mit dem zentralen Steuerbildschirm (11) verbunden ist und das Verfahren umfasst:
Empfangen (S11), über die externe Schnittstelle, einer Vorrichtungsbedienungsanweisung, die von dem zentralen Steuerbildschirm (11) gesendet wird, wobei die Vorrichtungsbedienungsanweisung eine Bedienungsanweisung ist, die von dem zentralen Steuerbildschirm (11) als Reaktion auf einen von einem Benutzer durchgeführten Auswahlvorgang für eine Vielzahl von Bedienungsanzeigeinformationen erzeugt wird, und wobei die Bedienungsanzeigeinformationen Anzeigeinformationen sind, die von der Fahrzeugsteuerungseinrichtung (13) gemäß den erhaltenen Vorrichtungsdaten der fahrzeugmontierten Vorrichtung (12) erzeugt werden; und
Ausführen (S12) einer Vorrichtungsbedienung, die der Vorrichtungsbedienungsanweisung entspricht, gemäß der Vorrichtungsbedienungsanweisung.

8. Verfahren nach Anspruch 7, wobei das Verfahren vor dem Empfangen der vom zentralen Steuerbildschirm (11) gesendeten Vorrichtungsbedienungsanweisung über die externe Schnittstelle ferner umfasst:
Senden (S13) von Vorrichtungsauthentifizierungsinformationen der fahrzeugmontierten Vorrichtung (12) an die Fahrzeugsteuerungseinrichtung (13) über den zentralen Steuerbildschirm (11); und
Empfangen (S14) eines Vorrichtungsauthentifizierungsergebnisses, das von der Fahrzeugsteuerungseinrichtung (13) über den zentralen Steuerbildschirm (11) gesendet wird, wobei das Vorrichtungsauthentifizierungsergebnis dazu dient, anzuzeigen, ob es sich bei der fahrzeugmontierten Vorrichtung (12) um eine anzuschließende Vorrichtung handelt.

9. Verfahren nach Anspruch 8, das ferner umfasst:
periodisches Senden (S15) von Informationen zum Verbindungsstatus der Vorrichtung über den zentralen Steuerbildschirm (11) an die Fahrzeugsteuerungseinrichtung (13), in dem Fall, dass die Authentifizierung erfolgreich ist, wobei die Informationen zum Verbindungsstatus der Vorrichtung dazu dienen, anzuzeigen, dass die Verbindung zwischen der fahrzeugmontierten Vorrichtung (12) und der Fahrzeugsteuerungseinrichtung (13) normal ist, oder Empfangen einer Ausschaltanweisung, die von der Fahrzeugsteuerungseinrichtung (13) über den zentralen Steuerbildschirm (11) gesendet wird, in dem Fall, dass die Authentifizierung fehlschlägt, und Ausschalten gemäß der Ausschaltanweisung, oder
Durchführen eines Ladens gemäß einer elektrischen Größe einer voreingestellten Leistung, die über die externe Schnittstelle übertragen wird, in dem Fall, dass die Authentifizierung fehlschlägt.

10. Vorrichtungssteuerungsverfahren, wobei das Verfahren von einer Fahrzeugsteuerungseinrichtung (13) in einem Vorrichtungssteuerungssystem (1) durchgeführt wird, wobei das Vorrichtungssteuerungssystem (1) aufweist: einen zentralen Steuerbildschirm (11), eine fahrzeugmontierte Vorrichtung (12) und die Fahrzeugsteuerungseinrichtung (13), wobei der zentrale Steuerbildschirm (11) eine Vielzahl von externen Schnittstellen aufweist, und der zentrale Steuerbildschirm (11) über die Vielzahl von externen Schnittstellen mit der fahrzeugmontierten Vorrichtung (12) verbunden ist; und wobei die Fahrzeugsteuerungseinrichtung (13) mit dem zentralen Steuerbildschirm (11) verbunden ist und das Verfahren umfasst:
Erhalten (S21) von Vorrichtungsdaten der fahrzeugmontierten Vorrichtung (12) über den zentralen Steuerbildschirm (11);
Erzeugen (S22) einer Vielzahl von Bedienungsanzeigeinformationen, die den Vorrichtungsdaten entsprechen, gemäß den Vorrichtungsdaten; und
Senden (S23) der Vielzahl von Bedienungsanzeigeinformationen an den zentralen Steuerbildschirm (11).

11. Verfahren nach Anspruch 10, wobei das Verfahren vor dem Erhalten von Vorrichtungsdaten der fahrzeugmontierten Vorrichtung (12) über den zentralen Steuerbildschirm (11) ferner umfasst:
Empfangen (S24) von Vorrichtungsauthentifizierungsinformationen, die von der fahrzeugmontierten Vorrichtung (12) über den zentralen Steuerbildschirm (11) gesendet werden; und
Durchführen einer Vorrichtungsauthentifizierung (S25) an der fahrzeugmontierten Vorrichtung (12) gemäß den Vorrichtungsauthentifizierungsinformationen und Senden eines Vorrichtungsauthentifizierungsergebnisses an die fahrzeugmontierte Vorrichtung (12) über den zentralen Steuerbildschirm (11), wobei das Vorrichtungsauthentifizierungsergebnis dazu dient, anzuzeigen, ob die fahrzeugmontierte Vorrichtung (12) eine anzuschließende Vorrichtung ist.

12. Verfahren nach Anspruch 11, das ferner umfasst:
Empfangen (S26) von Informationen zum Verbindungsstatus der Vorrichtung, die periodisch von der fahrzeugmontierten Vorrichtung (12) über den zentralen Steuerbildschirm (11) gesendet werden, in dem Fall, dass die Authentifizierung der fahrzeugmontierten Vorrichtung (12) erfolgreich ist, wobei die Informationen zum Verbindungsstatus der Vorrichtung dazu dienen, anzuzeigen, dass die Verbindung zwischen der fahrzeugmontierten Vorrichtung (12) und der Fahrzeugsteuerungseinrichtung (13) normal ist; Bestimmen, anhand der Informationen zum Verbindungsstatus der Vorrichtung, dass die Verbindung zwischen der fahrzeugmontierten Vorrichtung (12) und der Fahrzeugsteuerungseinrichtung (13) normal ist, oder
Senden, über den zentralen Steuerbildschirm (11), einer Ausschaltanweisung an die fahrzeugmontierte Vorrichtung (12) in dem Fall, dass die Authentifizierung der fahrzeugmontierten Vorrichtung (12) fehlschlägt, wobei die Ausschaltanweisung dazu dient, der fahrzeugmontierten Vorrichtung (12) anzuweisen, sich gemäß der Ausschaltanweisung auszuschalten, oder
Versorgen der fahrzeugmontierten Vorrichtung (12) gemäß einer voreingestellten Leistung über die externe Schnittstelle des zentralen Steuerbildschirms (11) mit Strom, in dem Fall, dass die Authentifizierung der fahrzeugmontierten Vorrichtung (12) fehlschlägt.

13. Vorrichtungssteuerungsverfahren, wobei das Verfahren von einem zentralen Steuerbildschirm (11) in einem Vorrichtungssteuerungssystem (1) durchgeführt wird, wobei das Vorrichtungssteuerungssystem (1) aufweist: den zentralen Steuerbildschirm (11), eine fahrzeugmontierte Vorrichtung (12) und eine Fahrzeugsteuerungseinrichtung (13), wobei der zentrale Steuerbildschirm (11) eine Vielzahl von externen Schnittstellen aufweist, und der zentrale Steuerbildschirm (11) über die Vielzahl von externen Schnittstellen mit der fahrzeugmontierten Vorrichtung (12) verbunden ist; und wobei die Fahrzeugsteuerungseinrichtung (13) mit dem zentralen Steuerbildschirm (11) verbunden ist und das Verfahren umfasst:
Empfangen (S31) einer Vielzahl von Bedienungsanzeigeinformationen, die von der Fahrzeugsteuerungseinrichtung (13) gesendet werden, wobei es sich bei den Bedienungsanzeigeinformationen um Anzeigeinformationen handelt, die von der Fahrzeugsteuerungseinrichtung (13) gemäß den erhaltenen Vorrichtungsdaten der fahrzeugmontierten Vorrichtung (12) erzeugt werden;
Erzeugen (S32) einer Vorrichtungsbedienungsanweisung als Reaktion auf einen von einem Benutzer durchgeführten Auswahlvorgang für die Vielzahl von Bedienungsanzeigeinformationen; und
Senden (S33) der Vorrichtungsbedienungsanweisung an die fahrzeugmontierte Vorrichtung (12) über die externe Schnittstelle, wobei die Vorrichtungsbedienungsanweisung dazu dient, der fahrzeugmontierten Vorrichtung (12) anzuweisen, eine der Vorrichtungsbedienungsanweisung entsprechenden Vorrichtungsbedienung auszuführen.

14. Verfahren nach Anspruch 13, wobei das Verfahren nach dem Empfang der von der Fahrzeugsteuerungseinrichtung (13) gesendeten Vielzahl von Bedienungsanzeigeinformationen ferner umfasst:
Anzeige der Vielzahl von Bedienungsanzeigeinformationen.

15. Fahrzeug (2200), welches das Vorrichtungssteuerungssystem (1) nach einem der Ansprüche 1 bis 6 aufweist.

## Revendications

1. Système de commande de dispositif (1), comprenant : un écran de commande centrale (11), un dispositif embarqué (12) et un appareil de commande de véhicule (13), dans lequel l'écran de commande centrale (11) comprend une pluralité d'interfaces externes, et l'écran de commande centrale (11) est connecté au dispositif embarqué (12) par l'intermédiaire des interfaces de la pluralité d'interfaces externes ; l'appareil de commande de véhicule (13) est connecté à l'écran de commande centrale (11) ;
l'appareil de commande de véhicule (13) est configuré pour obtenir des données de dispositif du dispositif embarqué (12) par l'intermédiaire de l'écran de commande centrale (11), pour générer une pluralité d'informations d'indication d'opération correspondant aux données de dispositif et pour envoyer les informations de la pluralité d'informations d'indication d'opération à l'écran de commande centrale (11) ;
l'écran de commande centrale (11) est configuré pour générer une instruction d'opération de dispositif en réponse à une opération de sélection effectuée par un utilisateur en ce qui concerne les informations de la pluralité d'informations d'indication d'opération et pour envoyer l'instruction d'opération de dispositif au dispositif embarqué (12) par l'intermédiaire de l'interface externe ; et
le dispositif embarqué (12) est configuré pour exécuter une opération de dispositif correspondant à l'instruction d'opération de dispositif.

2. Système de commande de dispositif (1) selon la revendication 1, dans lequel
le dispositif embarqué (12) est en outre configuré pour envoyer des informations d'authentification de dispositif du dispositif embarqué (12) à l'appareil de commande de véhicule (13) par l'intermédiaire de l'écran de commande centrale (11) ; et
l'appareil de commande de véhicule (13) est configuré pour effectuer une authentification de dispositif du dispositif embarqué (12) conformément aux informations d'authentification de dispositif.

3. Système de commande de dispositif (1) selon la revendication 2, dans lequel
le dispositif embarqué (12) est en outre configuré pour envoyer périodiquement des informations d'état de connexion de dispositif à l'appareil de commande de véhicule (13) par l'intermédiaire de l'écran de commande centrale (11) dans un cas dans lequel une authentification du dispositif embarqué (12) a réussi, les informations d'état de connexion de dispositif étant utilisées pour indiquer qu'une connexion entre le dispositif embarqué (12) et l'appareil de commande de véhicule (13) est normale.

4. Système de commande de dispositif (1) selon la revendication 2 ou la revendication 3, dans lequel
l'appareil de commande de véhicule (13) est en outre configuré pour envoyer une instruction de mise hors tension au dispositif embarqué (12) par l'intermédiaire de l'écran de commande centrale (11) dans un cas dans lequel une authentification du dispositif embarqué (12) échoue ; et
le dispositif embarqué (12) est en outre configuré pour se mettre hors tension conformément à l'instruction de mise hors tension.

5. Système de commande de dispositif (1) selon la revendication 2 ou la revendication 3, dans lequel
l'appareil de commande de véhicule (13) est en outre configuré pour alimenter le dispositif embarqué (12) conformément à une puissance prédéfinie par l'intermédiaire de l'interface externe de l'écran de commande centrale (11) dans un cas dans lequel une authentification du dispositif embarqué (12) échoue.

6. Système de commande de dispositif (1) selon l'une quelconque des revendications 1 à 5, dans lequel
l'écran de commande centrale (11) est configuré pour afficher les informations de la pluralité d'informations d'indication d'opération et pour générer, en réponse à une opération de sélection déclenchée par l'utilisateur sur la base des informations de la pluralité d'informations d'indication d'opération affichées, l'instruction d'opération de dispositif.

7. Procédé de commande de dispositif, dans lequel le procédé est mis en œuvre par un dispositif embarqué (12) dans un système de commande de dispositif (1), le système de commande de dispositif (1) comprend : un écran de commande centrale (11), le dispositif embarqué (12) et un appareil de commande de véhicule (13), l'écran de commande centrale (11) comprend une pluralité d'interfaces externes, et l'écran de commande centrale (11) est connecté au dispositif embarqué (12) par l'intermédiaire des interfaces de la pluralité d'interfaces externes ; et l'appareil de commande de véhicule (13) est connecté à l'écran de commande centrale (11), et le procédé comprend les étapes consistant à :
recevoir (S11), par l'intermédiaire de l'interface externe, une instruction d'opération de dispositif envoyée par l'écran de commande centrale (11), l'instruction d'opération de dispositif étant une instruction d'opération générée par l'écran de commande centrale (11) en réponse à une opération de sélection effectuée par un utilisateur en ce qui concerne les informations d'une pluralité d'informations d'indication d'opération, et les informations d'indication d'opération étant des informations d'indication générées par l'appareil de commande de véhicule (13) conformément à des données de dispositif obtenues du dispositif embarqué (12) ; et
exécuter (S12) une opération de dispositif correspondant à l'instruction d'opération de dispositif conformément à l'instruction d'opération de dispositif.

8. Procédé selon la revendication 7, dans lequel, avant l'étape de réception, par l'intermédiaire de l'interface externe, de l'instruction d'opération de dispositif envoyée par l'écran de commande centrale (11), le procédé comprend en outre les étapes consistant à :
envoyer (S13) des informations d'authentification de dispositif du dispositif embarqué (12) à l'appareil de commande de véhicule (13) par l'intermédiaire de l'écran de commande centrale (11) ; et
recevoir (S14) un résultat d'authentification de dispositif envoyé par l'appareil de commande de véhicule (13) par l'intermédiaire de l'écran de commande centrale (11), le résultat d'authentification de dispositif étant utilisé pour indiquer si le dispositif embarqué (12) est un dispositif à connecter.

9. Procédé selon la revendication 8, comprenant en outre les étapes consistant à :
envoyer périodiquement (S15) des informations d'état de connexion de dispositif à l'appareil de commande de véhicule (13) par l'intermédiaire de l'écran de commande centrale (11) dans un cas dans lequel une authentification a réussi, les informations d'état de connexion de dispositif étant utilisées pour indiquer qu'une connexion entre le dispositif embarqué (12) et l'appareil de commande de véhicule (13) est normale, ou
recevoir une instruction de mise hors tension envoyée par l'appareil de commande de véhicule (13) par l'intermédiaire de l'écran de commande centrale (11) dans un cas dans lequel une authentification échoue, et se mettre hors tension conformément à l'instruction de mise hors tension, ou
effectuer une charge conformément à une quantité électrique de puissance prédéfinie transmise par l'intermédiaire de l'interface externe dans un cas dans lequel l'authentification échoue.

10. Procédé de commande de dispositif, dans lequel le procédé est mis en œuvre par un appareil de commande de véhicule (13) dans un système de commande de dispositif (1), le système de commande de dispositif (1) comprend : un écran de commande centrale (11), un dispositif embarqué (12) et l'appareil de commande de véhicule (13), l'écran de commande centrale (11) comprend une pluralité d'interfaces externes, et l'écran de commande centrale (11) est connecté au dispositif embarqué (12) par l'intermédiaire des interfaces de la pluralité d'interfaces externes ; et l'appareil de commande de véhicule (13) est connecté à l'écran de commande centrale (11), et le procédé comprend les étapes consistant à :
obtenir (S21) des données de dispositif du dispositif embarqué (12) par l'intermédiaire de l'écran de commande centrale (11) ;
générer (S22) une pluralité d'informations d'indication d'opération correspondant aux données de dispositif conformément aux données de dispositif ; et
envoyer (S23) les informations de la pluralité d'informations d'indication d'opération à l'écran de commande centrale (11).

11. Procédé selon la revendication 10, dans lequel, avant l'étape d'obtention de données de dispositif du dispositif embarqué (12) par l'intermédiaire de l'écran de commande centrale (11), le procédé comprend en outre les étapes consistant à :
recevoir (S24) des informations d'authentification de dispositif envoyées par le dispositif embarqué (12) par l'intermédiaire de l'écran de commande centrale (11) ; et
effectuer (S25) une authentification de dispositif du dispositif embarqué (12) conformément aux informations d'authentification de dispositif, et envoyer un résultat d'authentification de dispositif au dispositif embarqué (12) par l'intermédiaire de l'écran de commande centrale (11), le résultat d'authentification de dispositif étant utilisé pour indiquer si le dispositif embarqué (12) est un dispositif à connecter.

12. Procédé selon la revendication 11, comprenant en outre les étapes consistant à :
recevoir (S26) des informations d'état de connexion de dispositif envoyées périodiquement par le dispositif embarqué (12) par l'intermédiaire de l'écran de commande centrale (11) dans un cas dans lequel une authentification du dispositif embarqué (12) a réussi, les informations d'état de connexion de dispositif étant utilisées pour indiquer qu'une connexion entre le dispositif embarqué (12) et l'appareil de commande de véhicule (13) est normale ; déterminer, conformément aux informations d'état de connexion de dispositif, qu'une connexion entre le dispositif embarqué (12) et l'appareil de commande de véhicule (13) est normale, ou
envoyer, par l'intermédiaire de l'écran de commande centrale (11), une instruction de mise hors tension au dispositif embarqué (12) dans un cas dans lequel une authentification du dispositif embarqué (12) échoue, l'instruction de mise hors tension étant utilisée pour indiquer au dispositif embarqué (12) de se mettre hors tension conformément à l'instruction de mise hors tension, ou
alimenter en puissance le dispositif embarqué (12) conformément à la puissance prédéfinie par l'intermédiaire de l'interface externe de l'écran de commande centrale (11) dans un cas dans lequel une authentification du dispositif embarqué (12) échoue.

13. Procédé de commande de dispositif, dans lequel le procédé est mis en œuvre par un écran de commande centrale (11) dans un système de commande de dispositif (1), le système de commande de dispositif (1) comprend : l'écran de commande centrale (11), un dispositif embarqué (12) et un appareil de commande de véhicule (13), l'écran de commande centrale (11) comprend une pluralité d'interfaces externes, et l'écran de commande centrale (11) est connecté au dispositif embarqué (12) par l'intermédiaire des interfaces de la pluralité d'interfaces externes ; et l'appareil de commande de véhicule (13) est connecté à l'écran de commande centrale (11), et le procédé comprend les étapes consistant à :
recevoir (S31) une pluralité d'informations d'indication d'opération envoyées par l'appareil de commande de véhicule (13), les informations d'application d'opération étant des informations d'indication générées par l'appareil de commande de véhicule (13) conformément à des données de dispositif obtenues du dispositif embarqué (12) ;
générer (S32) une instruction d'opération de dispositif en réponse à une opération de sélection effectuée par un utilisateur concernant les informations de la pluralité d'informations d'indication d'opération ; et
envoyer (S33) l'instruction d'opération de dispositif au dispositif embarqué (12) par l'intermédiaire de l'interface externe, l'instruction d'opération de dispositif étant utilisée pour indiquer au dispositif embarqué (12) d'exécuter une opération de dispositif correspondant à l'instruction d'opération de dispositif.

14. Procédé selon la revendication 13, dans lequel, après l'étape de réception des informations de la pluralité d'informations d'indication d'opération envoyées par l'appareil de commande de véhicule (13), le procédé comprend en outre l'étape consistant à :
afficher les informations de la pluralité d'informations d'indication d'opération.

15. Véhicule (2200), comprenant le système de commande de dispositif (1) selon l'une quelconque des revendications 1 à 6.
